# EUROPÄISCHE PATENTANMELDUNG

(11) **EP 3 385 162 A1**
(43) Veröffentlichungstag der Anmeldung: **10.10.2018**
(21) Anmeldenummer: 17165512.9
(22) Anmeldetag: 07.04.2017
(51) Int. Cl.: B64C 39/02, B64F 1/00, G05D 1/02, G21C 17/013, G08G 5/00, H02J 7/02

(54) **BASISFAHRZEUG FÜR EIN AUFKLÄRUNGSFAHRZEUG SOWIE VERFAHREN DAFÜR UND SYSTEM DAMIT**

(71) Anmelder: Pfoertzsch, Antony, 28355 Bremen (DE)
(72) Erfinder: Pfoertzsch, Antony, 28355 Bremen (DE)
(74) Vertreter: Eisenführ Speiser

(57) **Zusammenfassung**

Die Erfindung betrifft ein Basisfahrzeug (10) für ein Aufklärungsfahrzeug (22), das einen Antrieb (18) zur Fortbewegung des Basisfahrzeugs (10) sowie eine Steuerung zur unbemannten Fortbewegung des Basisfahrzeugs (10) umfasst. Außerdem umfasst das Basisfahrzeug (10) eine Energietransfereinheit (12) zum Transferieren von Energie an mindestens ein unbemanntes Aufklärungsfahrzeug (22) und eine Kommunikationseinheit mit einer Drahtlosschnittstelle zumindest zum Austausch von Positionsdaten des Basisfahrzeugs (10) mit dem mindestens einen Aufklärungsfahrzeug (22).

Ferner betrifft die Erfindung ein Verfahren zum Betreiben eines Basisfahrzeugs (10) sowie ein System mit mindestens einem Basisfahrzeug (10) und mindestens einem Aufklärungsfahrzeug (22).

## Beschreibung

Die Erfindung betrifft den Bereich unbemannter Fahrzeuge, insbesondere unbemannter Flugobjekte, nämlich Drohnen, insbesondere Flugdrohnen, wie Copter oder Multicopter, und Flächenflieger sowie allgemein VTOL (Vertical Take-Off and Landing Vehicles).

Derartige Fahrzeuge sind bekannt, um selbsttätig Aufklärungsarbeit in vorbestimmten Gebieten zu leisten. So sind beispielsweise Flugobjekte bekannt, die in Katastrophengebieten, nämlich einem Gebiet, das beispielsweise aufgrund einer Naturkatastrophe als Katastrophengebiet bezeichnet wird, als Transport- und Aufklärungssysteme genutzt werden. Diese Systeme ermöglichen beispielsweise das beschleunigte Auffinden von Personen sowie die Versorgung von abgeschnittenen Bereichen, etwa mit Medikamenten.

Hierbei ist es häufig besonders sinnvoll, an den Einsatz angepasste Aufklärungsfahrzeuge, die zum Beispiel besonders klein und wendig sind, für spezielle Aufgaben bei der Aufklärung zu verwenden. Nachteilig an diesen Fahrzeugen ist jedoch, dass für längere Missionen die mitgeführte Energiemenge zum Betreiben der Aufklärungsfahrzeuge während der Aufklärung nicht ausreichend ist, da das Aufklärungsfahrzeug aufgrund seiner spezialisierten Ausrüstung keine größere Akkukapazität mit sich tragen kann.

Aus diesem Grund sind Aufklärungssysteme zeitlich nur sehr begrenzt einsetzbar und müssen zum Beispiel nach dem Erreichen eines Katastrophengebiets und nach kurzer Aufklärungstätigkeit oder Aufklärungsarbeit, zum Beispiel durch Videoaufnahmen des Gebietes, wieder zu einer Ladestation zurückkehren.

Ein effektiver Einsatz derartiger Aufklärungsfahrzeuge ist somit nicht möglich.

Es ist Aufgabe der vorliegenden Erfindung, eines der vorgenannten Probleme des Standes der Technik zu lösen. Insbesondere soll eine Lösung gefunden werden, auch einen zeitlich längeren Einsatz von Aufklärungsdrohnen, die nur eine beschränkte Energieversorgung für ihren Antrieb aufweisen, zu gewährleisten.

Erfindungsgemäß wird daher zunächst ein Basisfahrzeug vorgeschlagen. Das Basisfahrzeug weist einen Antrieb zur Fortbewegung des Basisfahrzeugs auf. Außerdem ist eine Steuerung zur unbemannten Fortbewegung des Basisfahrzeugs vorgesehen, die vorzugsweise zumindest den Antrieb steuert. Außerdem ist eine Energietransfereinheit zum Transferieren von Energie an mindestens ein unbemanntes Aufklärungsfahrzeug vorgesehen. Das Transferieren kann auch Übertragen genannt werden. Unbemannte Aufklä-rungsfahrzeuge sind vorzugsweise unbemannte Fahrzeuge, die eine Ausrüstung aufweisen, mit der Aufklärungsarbeit, zum Beispiel das Auffinden von Personen in einem Katastrophengebiet, ermöglicht wird. Das Transferieren von Energie umfasst hier insbesondere das Transferieren von elektrischer Energie, wobei aber auch der Transfer von chemischer oder mechanischer Energie umfasst ist. Chemische Energie wird beispielsweise in Form eines Brennstoffs für eine Brennstoffzelle in einem Tankprozess übertragen.

Das Basisfahrzeug weist außerdem eine Kommunikationseinheit mit einer Drahtlosschnittstelle auf, um zumindest mit dem Aufklärungsfahrzeug Positionsdaten auszutauschen.

Demnach ist eine Aufklärung mit Aufklärungsfahrzeugen möglich, bei der die Aufklärungsfahrzeuge über Tage oder Wochen eigenständig und in beliebiger Anzahl an entlegenen Orten ohne feste Infrastruktur zum Laden oder zum Energietransfer Aufklärungs- oder Versorgungsmissionen durchführen können. Derartige Langzeitmissionen sind somit ohne menschliche oder maschinelle Hilfe möglich. Dies ist möglich, da das Basisfahrzeug unabhängig von den Aufklärungsfahrzeugen funktionell ausgelegt ist und somit nicht selbst Bestandteil bestimmter Aufklärungsmissionen sein muss, bei denen vorteilhafterweise ein speziell ausgeführtes Aufklärungsfahrzeug sinnvoller eingesetzt werden kann.

Ein Basisfahrzeug wird somit für den primären Zweck des Energietransfers an die Aufklärungsfahrzeuge ausgelegt.

Das Basisfahrzeug ist mit einem Antrieb und einer Steuerung versehen, um das Basisfahrzeug möglichst dicht an den Ort, an dem die Aufklärung mit den Aufklärungsfahrzeugen stattfinden soll, zu positionieren. Das Basisfahrzeug verfügt ferner über eine Kommunikationseinheit, um mit den Aufklärungsfahrzeugen die zurzeit eingenommene Position auszutauschen, sodass sich die Aufklärungsfahrzeuge sicher und eindeutig der Position der Energietransfereinheit zum Transferieren der Energie nähern können.

Weiterer Vorteil ist auch, dass die Geschwindigkeit bei Ausführung einer Mission, also zum Beispiel einer Aufklärungstätigkeit, durch das direkte Laden oder Transferieren von Energie vor Ort verbessert wird und somit die Zeitdauer der Mission wesentlich verkürzt werden kann.

Gemäß einer ersten Ausführungsform umfasst die Energietransfereinheit des Basisfahrzeugs mindestens eine Batterie, mindestens einen Akkumulator und/oder mindestens einen Energiewandler. Das heißt, das Basisfahrzeug ist ausgelegt, eine Batterie oder einen Akkumulator mit sich zu führen, um mindestens ein Aufklärungsfahrzeug mindestens einmal, vorzugsweise aber mehrfach, während eines Energietransfers des Aufklärungsfahrzeugs mit Energie zu versorgen. Vorzugsweise dient die Batterie oder der Akkumulator auch, um das Basisfahrzeug selbst mit Energie zu versorgen. Alternativ oder zusätzlich zur Batterie oder zum Akkumulator ist ein Energiewandler vorgesehen.

Gemäß einer weiteren Ausführungsform ist die Energietransfereinheit eine Ladeeinheit zum Transferieren elektrischer Energie, eine Tankeinheit zum Transferieren von Energie in Form eines Brennstoffs oder eines chemischen Energieträgers oder eine mechanische Einheit zum Wechseln eines Energiespeichers, um dadurch Energie zu transferieren.

Gemäß einer besonders vorteilhaften Ausführungsform umfasst die Energietransfereinheit einen Akkumulator und einen Energiewandler, wobei der Energiewandler dient, um den Akkumulator zu laden, der wiederum dient, um ein Aufklärungsfahrzeug bei einem Transferieren der Energie, nämlich einen Ladevorgang, mit Energie zu versorgen. Der Energiewandler ist beispielsweise eine Brennstoffzelle, ein Verbrennungsmotor, eine Windenergieanlage und/oder ein oder mehrere Solarmodule.

Gemäß einer weiteren vorteilhaften Ausführungsform weist das Basisfahrzeug mehrere Solarmodule als Energiewandler auf, die das Basisfahrzeug an dem Ort, an dem es an Aufklärungsfahrzeuge in Energietransfervorgängen mit der Energietransfereinheit Energie transferieren soll, ausfährt oder ausklappt. Das heißt, dass die Solarmodule während der Fortbewegung des Basisfahrzeugs vorteilhafterweise eine andere Position aufweisen als im stationären Fall des Basisfahrzeugs, wenn dieses nämlich vorübergehend stationär an einem Ort abgestellt wird, um dort als Energietransfereinheit für Aufklärungsfahrzeuge zu dienen.

Dank des Energiewandlers, insbesondere der als Solarmodule ausgebildeten Energiewandler, ist das Basisfahrzeug an einem beliebigen Ort absetzbar und/oder positionierbar. An diesem Ort können dann dank der Solarmodule vorhandene Akkumulatoren des Basisfahrzeugs wieder vollständig geladen werden und das Basisfahrzeug kann sich danach von diesem Punkt an weiter fortbewegen.

Zwischenzeitlich, also vor dem Weiterbewegen nach dem eigenen Laden, kann das Basisfahrzeug vorteilhafterweise auch noch ein oder mehrere Aufklärungsfahrzeuge mit der durch die Solarmodule gewonnenen Energie laden. Ein Verband aus dem Basisfahrzeug und mehreren Aufklärungsfahrzeugen kann sich also dank des Energiewandlers, insbesondere in Zusammenschau mit einem Akkumulator, etappenweise auf einen Einsatzort zubewegen.

Gemäß einer weiteren Ausführungsform ist das Basisfahrzeug ein unbemanntes Flugobjekt, nämlich vorzugsweise ein Flächenflieger oder eine Flugdrohne, wie ein Multicopter. Die Flugdrohne, nämlich der Multicopter, ist beispielsweise ein Quadrocopter oder ein Octocopter.

Unbemannte Flugobjekte sind besonders vorteilhaft zur Aufklärung von Katastrophengebieten einsetzbar, da sich diese auch in unwegsamem Gelände gut fortbewegen, nämlich fliegen, können. Das als Flugobjekt ausgebildete Basisfahrzeug lässt sich damit auch an Orte bringen, die von einem Bodenfahrzeug nicht erreichbar sind. Als Flugdrohnen ausgebildete Flugobjekte weisen dazu noch den weiteren Vorteil auf, dass diese senkrecht starten und landen können. Mit diesen lassen sich daher im Aufklärungsgebiet gezielte Punkte anfliegen. Beispielsweise genügen zum Landen und Aufstellen des Basisfahrzeugs vergleichsweise kleine ebene Bereiche.

Gemäß einer weiteren Ausführungsform ist die Kommunikationseinheit eingerichtet, Parameter über die Drahtlosschnittstelle zumindest des einen Aufklärungsfahrzeugs zu empfangen. Die Kommunikationseinheit kann also Parameter eines oder mehrerer Aufklärungsfahrzeuge empfangen. Parameter sind hier beispielsweise Positionsdaten der Aufklärungsfahrzeuge oder Daten, die die momentane Fortbewegung eines Aufklärungsfahrzeugs, wie beispielsweise die Geschwindigkeit eines Aufklärungsfahrzeugs oder dessen Richtung, beschreiben. Außerdem sind aber auch Parameter von der Kommunikationseinheit empfangbar, die beispielsweise Funktionswerte des Aufklärungsfahrzeugs, wie beispielsweise Temperaturen eines Antriebs, Drehzahl des Antriebs, momentaner Betriebsmodus und dergleichen, betreffen.

Das Basisfahrzeug weist außerdem eine Datenverarbeitungseinrichtung, die auch Recheneinheit genannt werden kann, zum Beispiel mit einem Prozessor, auf, die in Abhängigkeit der empfangenen Parameter Befehle für das oder ein anderes Aufklärungsfahrzeug erzeugt. Ferner ist die Kommunikationseinheit eingerichtet, die erzeugten Befehle an das oder ein weiteres Aufklärungsfahrzeug auszusenden. Das Basisfahrzeug weist somit die Fähigkeit auf, Parameter der mit dem Basisfahrzeug kommunizierenden Aufklärungsfahrzeuge zu empfangen und gezielt die Aufklärungsfahrzeuge mit Befehlen zu versorgen, um beispielsweise eine Mission, die vom Basisfahrzeug geplant und vorzugsweise weiterentwickelt wird, auszuführen.

Außerdem ist es beispielsweise möglich, dass ein erstes Aufklärungsfahrzeug, dessen Akkuleistung unterhalb einem Schwellenwert liegt, diese geringe Akkuleistung dem Basisfahrzeug meldet. Das Basisfahrzeug gibt dann den Befehl an das Aufklärungsfahrzeug, sich zur Energietransfereinheit des Basisfahrzeugs zu bewegen, um dort wieder mit Energie versorgt zu werden. Gleichzeitig ist es dann möglich, dass das Basisfahrzeug ein anderes Aufklärungsfahrzeug anweist, die Aufklärungsposition, die das vorherige Aufklärungsfahrzeug mit der geringen Akkuleistung, das nun geladen wird, übernommen hatte, zu übernehmen, um in der Position die Aufklärung im Wesentlichen lückenlos fortzusetzen. Weitere Szenarien sind durch das Zusammenspiel der Datenverarbeitungseinrichtung und der Kommunikationseinheit möglich.

Gemäß einer weiteren Ausführungsform ist die drahtlose Schnittstelle oder Drahtlosschnittstelle eine Schnittstelle zum Herstellen mindestens einer drahtlosen Breitbandverbindung, insbesondere einer Satellitenverbindung, einer proprietären Funkverbindung und/oder einer Mobilfunkverbindung, zum Beispiel eine LTE- oder 5G-Verbindung. Demnach ist die Schnittstelle so geeignet, große Datenmengen, wie beispielsweise Videodaten, zu übertragen.

Gemäß einer weiteren Ausführungsform umfasst das Basisfahrzeug eine Relaisstation oder eine Basisstation zum Weiterleiten von Daten von dem mindestens einen Aufklärungsfahrzeug zu einer Leitstelle oder von einer Leitstelle zu dem mindestens einen Aufklärungsfahrzeug. Eine Leitstelle kann mobil oder stationär sein. Im einfachsten Fall ist eine Leitstelle ein mobiles Bedienelement, wie zum Beispiel ein Smartphone, TabletPC oder Computer.

Mit dem Aufklärungsfahrzeug aufgenommene Aufklärungsdaten, wie beispielsweise Sensor- oder Videodaten, lassen sich somit über das Basisfahrzeug zu einer Leitstelle übertragen. Die Relaisstation oder Basisstation des Basisfahrzeugs ermöglicht somit eine Erweiterung der Reichweite zur Übertragung von Daten zwischen der Leistelle und einem Aufklärungsfahrzeug.

Setzt man mehrere der Basisfahrzeuge ein, so lassen sich diese Relaisstationen oder Basisstationen der einzelnen Basisfahrzeuge in Reihe schalten, um somit die mögliche Übertragungsreichweite zwischen einem Aufklärungsfahrzeug und einer Leitstelle beliebig zu erweitern.

Gemäß einer weiteren Ausführungsform ist die Kommunikationseinheit eingerichtet, Daten mit mindestens zwei unterschiedlichen Datenprotokollen zu empfangen oder auszusenden. Hierdurch ergibt sich der Vorteil, dass beispielsweise ein Aufklärungsfahrzeug mit dem Basisfahrzeug über ein erstes Datenprotokoll beispielsweise ein Mobilfunkprotokoll kommunizieren kann. Die Basisstation wandelt dieses Mobilfunkprotokoll dann in Daten mit einem weiteren Protokoll, beispielsweise in ein Satellitenprotokoll, um und sendet die vom Aufklärungsfahrzeug empfangenen Daten an einen Satelliten.

Hierdurch ist es in vorteilhafter Weise möglich, Daten einer Aufklärungsmission an einem entlegenen Ort, der nicht die Infrastruktur bereitstellt, mit dem Protokoll, das die Aufklärungsfahrzeuge verwenden, weiterzuleiten und so trotzdem Daten von den Aufklärungsfahrzeugen an die Leitstelle zu übertragen. Hierzu werden die Daten zunächst von den Aufklärungsfahrzeugen an das Basisfahrzeug übertragen und von diesem dann an die Leitstelle weitergeleitet. Eine Datenübertragung, die vergleichsweise viel Energie benötigt, wie zum Beispiel eine Datenübertragung von und zu einem Satelliten, muss daher lediglich durch das Basisfahrzeug bereitgestellt werden, das ohnehin eine große Energiequelle, beispielsweise einen Akku, mit daran angeschlossenen Solarmodulen aufweist.

Die Aufklärungsfahrzeuge selbst können eine Übertragung zum Basisfahrzeug mittels eines Datenprotokolls herstellen, das nur für kurze Übertragungswege ausgebildet ist und daher vergleichsweise wenig Energie benötigt. Hierbei sei beispielsweise eine Mobildatenübertragung als mögliches Kommunikationsprotokoll zwischen dem Basisfahrzeug und dem Aufklärungsfahrzeug genannt.

Gemäß einer weiteren Ausführungsform weist das Basisfahrzeug einen Speicher auf, um vorgegebene Daten oder über die Kommunikationseinheit empfangene Daten von der Leitstelle zu hinterlegen. Zusätzlich oder Alternativ ist der Speicher auch ausgestaltet, um über die Kommunikationseinheit empfangene Daten von dem mindestens einen Aufklärungsfahrzeug zu hinterlegen. Hierdurch wird es ermöglicht, beispielsweise Sensor- oder Videodaten, die mit einem Aufklärungsfahrzeug aufgenommen werden, im Speicher des Basisfahrzeugs zu hinterlegen. Das Aufklärungsfahrzeug selbst muss somit keinen Speicher aufweisen, sondern kann beim Aufzeichnen von Daten diese Daten direkt über die Drahtlosverbindung an das Basisfahrzeug senden, das dann die Speicherung übernimmt.

Daten, die vorgegeben werden, also beispielsweise Missionsdaten, die zu Beginn vor dem Aussetzen des Basisfahrzeugs bereitstehen und dienen, einen Einsatz zu koordinieren, können ebenfalls in diesem Speicher abgespeichert werden. Werden diese vorgegebenen Missionsdaten beispielsweise über die Kommunikationseinheit von der Leistelle aktualisiert, so werden auch entsprechende Aktualisierungen im Speicher hinterlegt.

Gemäß einer weiteren Ausführungsform weist das Basisfahrzeug Sensoren zum Erfassen seiner Umgebung und seiner Eigenbewegung auf. Die Sensoren sind mit der Steuerung verbunden. Die Steuerung ist eingerichtet, das Basisfahrzeug in Abhängigkeit von den Sensordaten und den vorgegebenen Daten, die beispielsweise im Speicher hinterlegt sind und zum Beispiel Zielkoordinaten umfassen, fortzubewegen oder umzupositionieren. Alternativ oder zusätzlich ist die Steuerung eingerichtet, das Basisfahrzeug in Abhängigkeit der Sensordaten und über die Kommunikationseinheit empfangener Daten autonom fortzubewegen oder umzupositionieren. Eine autonome Fortbewegung ohne das Eingreifen eines Bedieners ist somit möglich.

Ferner betrifft die Erfindung ein Verfahren zum Betreiben eines Basisfahrzeugs gemäß einer der vorgenannten Ausführungsformen. Zum Betreiben tauscht das Basisfahrzeug mit mindestens einem Aufklärungsfahrzeug Daten über eine Drahtlosschnittstelle des Basisfahrzeugs aus.

Gemäß einer Ausführungsform wird an das Aufklärungsfahrzeug, nämlich das eine oder mehrere Aufklärungsfahrzeuge, von einem Basisfahrzeug Energie transferiert. Hierzu tauschen das Aufklärungsfahrzeug und das Basisfahrzeug über eine Drahtlosschnittstelle Positionsdaten miteinander aus. Basierend auf den Positionsdaten des Basisfahrzeugs nähert sich das Aufklärungsfahrzeug einer Energietransfereinheit des Basisfahrzeugs. Nach Erreichen der Energietransfereinheit durch das Aufklärungsfahrzeug wird Energie vom Basisfahrzeug zum Aufklärungsfahrzeug übertragen oder transferiert. Beispielsweise wird hierfür eine kontaktlose Energieübertragung verwendet.

Gemäß einer weiteren Ausführungsform des Verfahrens sendet das Basisfahrzeug Befehle an mehrere Aufklärungsfahrzeuge über die Drahtlosschnittstelle aus, um die Aufklärungsfahrzeuge zumindest teilweise direkt oder indirekt zu steuern. Direktes Steuern bedeutet, dass das Basisfahrzeug unmittelbar Befehle als Steuerbefehle an die Aufklärungsfahrzeuge aussendet, um unmittelbare Bewegungsreaktionen des Aufklärungsfahrzeugs auszuführen. Indirekt bedeutet in diesem Zusammenhang, dass das Basisfahrzeug Befehle an das oder die Aufklärungsfahrzeuge sendet und das oder die Aufklärungsfahrzeuge dann anhand dieser Befehle eine autonome Steuerung durchführen. Ein indirekter Befehl kann beispielsweise das Anfliegen eines Zielpunkts sein, wobei dem Aufklärungsfahrzeug selbst überlassen wird, wie es diesen Zielpunkt erreicht.

Hierdurch ist es möglich, dass das Basisfahrzeug Flugzonen, Ladepläne und weitere Missionsabläufe verwaltet und koordiniert, um diese dann an die Aufklärungsfahrzeuge für eine koordinierte Aufklärung zu übertragen.

Gemäß einer weiteren Ausführungsform sendet das Basisfahrzeug Referenzdatensätze zur Erkennung vordefinierter Objekte an die Aufklärungsfahrzeuge. Diese Referenzdatensätze können über eine Leitstelle in das Basisfahrzeug geladen werden und/oder basierend auf erfassten Sensordaten innerhalb des Basisfahrzeugs generiert werden. Die Referenzdaten können beispielsweise Abmessungen, Infrarotsignaturen und/oder Bilddaten des zu erfassenden Objektes umfassen. Vorzugsweise können die Datensätze auch in Form von neuronalen Netzen in die Aufklärungsfahrzeuge geladen werden. Diese können von der Leitstelle hochgeladen werden und/oder auf Basis von Sensordaten innerhalb des Basisfahrzeugs generiert werden.

Hierdurch können Aufklärungsfahrzeuge auch ohne Verbindung, beispielsweise auf Grund einer aktiven Störung der Verbindung, zum Basisfahrzeug autonom Objekte identifizieren und diese verfolgen und/oder melden. Ebenfalls sinkt hierdurch die benötigte Bandbreite für die Sensordaten sowie die Latenz zur Ausführung einer Aktion.

Gemäß einer weiteren Ausführungsform des Verfahrens werden mit mindestens einem Sensor, mindestens einer Kamera oder mindestens einem Mikrofon, die Bestandteil mindestens eines Aufklärungsfahrzeugs sind, Daten aufgenommen und an das Basisfahrzeug übertragen. Diese Daten sind beispielsweise Video- und/oder Tonaufnahmen oder Foto- und/oder Tonaufnahmen des Aufklärungsgebiets.

Gemäß einer weiteren Ausführungsform des Verfahrens werden die Daten im Basisfahrzeug gespeichert oder an eine Leitstelle übertragen. Zusätzlich oder alternativ werden die Daten direkt verarbeitet und in Abhängigkeit der verarbeiteten Daten Befehle an ein oder mehrere Aufklärungsfahrzeuge oder die Steuerung des Basisfahrzeugs selbst zur Fortbewegung oder Umpositionierung ausgesendet. Somit können Sensordaten, beispielsweise Umgebungsdaten, direkt in die Steuerung des Basisfahrzeugs oder die Aufklärungsfahrzeuge mit einbezogen werden.

Ferner betrifft die Erfindung ein System mit mindestens einem Basisfahrzeug nach einer der vorgenannten Ausführungsformen und mindestens einem Aufklärungsfahrzeug, wobei das System eingerichtet ist, um ein Verfahren nach einer der vorgenannten Ausführungsformen auszuführen.

Gemäß einer weiteren Ausführungsform der Erfindung sind das Basisfahrzeug und/oder die Aufklärungsfahrzeuge mit abwerfbaren Sensoren ausgestattet, die eine Überwachung ermöglichen, auch ohne dass das entsprechende Fahrzeug sich weiterhin am Ort des Abwurfs befindet.

Gemäß einer weiteren Ausführungsform sind das Basisfahrzeug und/oder die Aufklärungsfahrzeuge und/oder ihre abwerfbaren Sensoren mit einer Nahfeldkommunikationseinheit ausgestattet. Diese ermöglicht die automatische Authentifizierung zugangsberechtigter Personen unmittelbar oder bereits vor Beginn des Überwachens eines Bereichs.

Gemäß einer weiteren Ausführungsform ist die Recheneinheit bzw. die Datenverarbeitungseinheit eingerichtet, umfangreiche Sensordaten in Form von Audio-, Videound/oder Funksignalen zu verarbeiten. Diese Daten sind vorzugsweise von dem Basisfahrzeug selbst oder von den Aufklärungsfahrzeugen generiert worden.

Gemäß einer weiteren Ausführungsform entspricht zumindest ein Protokoll der drahtlosen Datenschnittstelle einem verbrauchsarmen Funksystem, vorzugsweise nach dem LoRa-Standard. Hierdurch können Aufklärungsfahrzeuge Zielpunkte anfahren oder Anfliegen und über lange Zeiträume inaktiv auf Reaktivierung warten. Dies kann in Form eines Signals von einem Basisfahrzeug oder eines externen, geeigneten Funksignals ausgeführt werden.

Gemäß einer weiteren Ausführungsform beinhalten zumindest die Aufklärungsfahrzeuge ein verbrauchsarmes Sensorsystem, welches das inaktive Flugsystem reaktivieren kann, sobald ein geeignetes Sensorsignal gemessen wird. Dieses kann zum Beispiel in Form von Beschleunigung, Magnetismus, Wärmeabstrahlung, Funkwellen oder Schallwellen ausgelöst werden.

Gemäß einer weiteren Ausführungsform verwaltet jedes Basisfahrzeug eines Systems mit mehreren Basisfahrzeugen ein eigenes Gebiet oder einen eigenen Luftraum und kommuniziert mit den weiteren Basisfahrzeugen. Ein kollisionsfreier Betrieb sowie eine effiziente Emissionsausführung werden somit gewährleistet.

Gemäß einer weiteren Ausführungsform wird innerhalb eines Systems mit mehreren Basisfahrzeugen ein Aufklärungsfahrzeug nicht direkt angesteuert, sondern es werden für den Bereich gewisse Aufgaben, beispielsweise von einem Benutzer, verteilt. Das Flugsystem stellt dann selbständig sicher, dass das nächstgelegene Basisfahrzeug ein Aufklärungsfahrzeug startet und dass dieses über ausreichend Akkuladung verfügt.

Gemäß einer weiteren Ausführungsform führt das System eigenständige Missionen innerhalb des ihm zugeordneten Bereichs oder einer Luftzone durch. Diese Missionen dienen etwa der Aufklärung. Missionen können vorzugsweise nach Zeitplänen oder willkürlich, zum Beispiel in Abhängigkeit von Sensordaten, ausgeführt werden. Ein Basisfahrzeug kann vorzugsweise auch seinen Aufenthaltsort nach ausgeführter Mission eigenständig verändern, um dadurch ein weiteres Gebiet zu inspizieren oder nicht autorisierten Personen die Auffindung der Drohne zu erschweren.

Gemäß einer weiteren Ausführungsform kann ein Benutzer die Dichte an Basisfahrzeugen in einem festgelegten Gebiet festlegen. Hierbei passen die Basisfahrzeuge ihre zu verwaltende Flugzone im Hinblick auf ihre Größe eigenständig an, um eine vollständige Abdeckung zu gewährleisten. Das Flugsystem kann darauf hinweisen, dass die Abdeckung eines Gebiets aufgrund der Größe im Verhältnis zur Anzahl der Aufklärungsfahrzeuge nicht sichergestellt werden kann.

Weitere Ausführungsformen ergeben sich anhand der in den Figuren näher erläuterten Ausführungsbeispiele. In den Figuren zeigt
- Fig. 1: ein Basisfahrzeug, das als Multicopter ausgebildet ist,
- Fig. 2: das Basisfahrzeug mit einem darauf gelandeten Aufklärungsfahrzeug,
- Fig. 3: eine etappenweise Fortbewegung von Aufklärungsfahrzeugen,
- Fig. 4: ein Beispiel des Energieübertragens an Aufklärungsfahrzeuge,
- Fig. 5: eine Missionsanordnung von vier Aufklärungsfahrzeugen und einem Basisfahrzeug,
- Fig. 6: eine weitere Anordnung zur Aufklärung eines Gebiets und
- Fig. 7: einen Zonenbereich, der in mehrere Überwachungszellen unterteilt ist,
- Fig. 8: den Ablauf eines Verfahrens zum Energietransferieren an ein Aufklärungsfahrzeugs mit einem Basisfahrzeug.

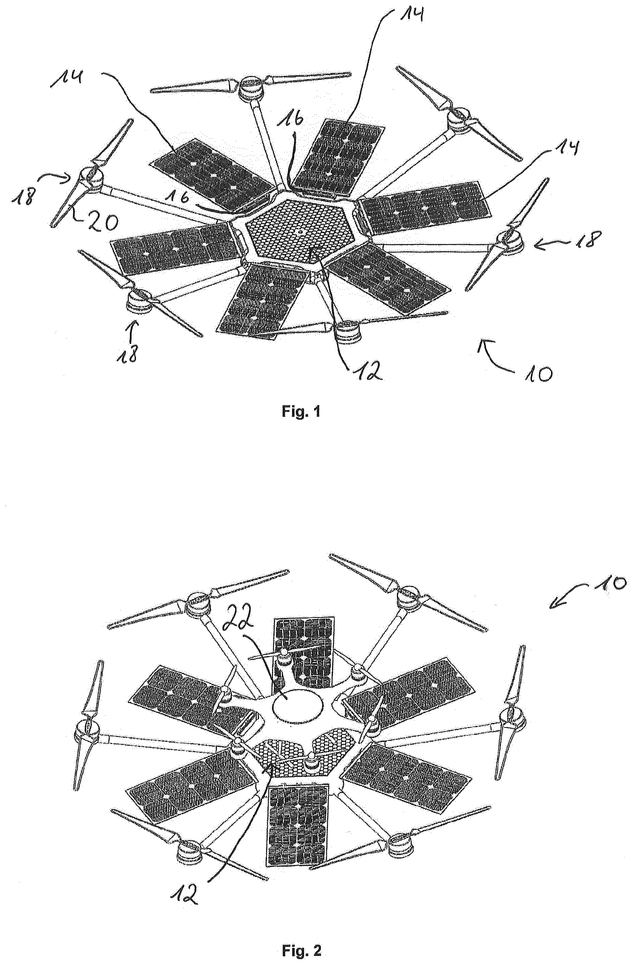

Fig. 1 zeigt ein Basisfahrzeug 10, das hier als Flugdrohne, nämlich als Multicopter, ausgestaltet ist. Das Basisfahrzeug 10 weist in einem zentralen Bereich eine Energietransfereinheit 12 auf. Die Energietransfereinheit 12 dient zum Transferieren von Energie an Aufklärungsfahrzeuge. In Fig. 1 ist lediglich die Oberfläche der Energietransfereinheit 12 dargestellt, wobei die Energieübertragung zu einem Aufklärungsfahrzeug damit kontaktlos erfolgt. Die Energietransfereinheit 12 wird mit einem unter der Energietransfereinheit 12 angeordneten, hier nicht dargestellten Akkumulator mit Energie zum Laden des Aufklärungsfahrzeugs versorgt.

Der Akkumulator erhält seine Energie über die hier exemplarisch sechs dargestellten Solarmodule 14. Diese sind jeweils über ein Gelenk 16 zur Mitte, also zum zentralen Bereich des Basisfahrzeugs 10 hochklappbar. Dieser Klappmechanismus dient, um es Antrieben 18, die hier aus einem Motor mit daran angeschlossenem Propeller ausgebildet sind, zu ermöglichen, sich frei zu bewegen. Die Antriebe 18 dienen zum Umpositionieren oder Ausrichten des Basisfahrzeugs 10, sodass das Basisfahrzeug 10 damit an einem entlegenen Ort positioniert werden kann.

Im Einzelnen bewegt sich das Basisfahrzeug 10 also mit seinen Antrieben 18 an einen Einsatzort, zum Beispiel ein Aufklärungsgebiet. An dem Einsatzort werden dann die Solarmodule 14 über die Gelenke 16 ausgeklappt. Daraufhin ist die Energietransfereinheit 12 freigegeben, sodass Aufklärungsfahrzeuge auf der Energietransfereinheit geladen werden können. Die Propelloren 20 der Antriebe 18 werden vorzugsweise vor dem Ausklappen der Solarmodule 14 tangential zu einem Mittelpunkt des Basisfahrzeugs 10 ausgerichtet, sodass sich die Solarmodule 14, die möglichst großflächig gewählt sind, um möglichst viel Energie bereitstellen zu können, ohne Beeinträchtigung durch die Propeller 20 ausklappen lassen. Das Basisfahrzeug 10 ist unbemannt und weist eine nicht dargestellte Steuerung im Inneren auf, um das Basisfahrzeug 10 bedienerlos oder durch Fernbedienung fortbewegen zu können.

In Fig. 2 ist das Basisfahrzeug 10 aus Fig. 1 dargestellt, wobei nun ein Aufklärungsfahrzeug 22 auf der Energietransfereinheit 12 gelandet ist. Das Aufklärungsfahrzeug 22 entspricht ebenfalls einer Flugdrohne, die jedoch im Verhältnis zum Basisfahrzeug 10 wesentlich kleiner und damit wendiger zum Ausführen einer Aufklärungsmission ausgebildet ist.

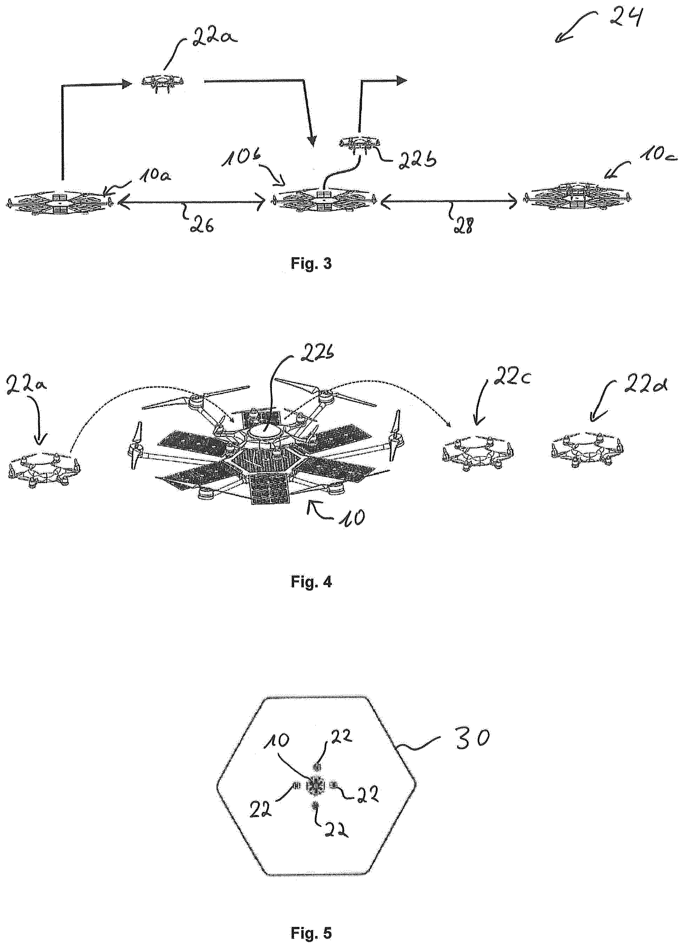

Fig. 3 zeigt nun ein System 24 aus mehreren Basisfahrzeugen 10 und mehreren Aufklärungsfahrzeugen 22. Die Basisfahrzeuge 10a und 10b sind in einer Distanz 26 zueinander angeordnet, die ein Aufklärungsfahrzeug 22 mit seinem eigenen Energiespeicher durch Antreiben des Aufklärungsfahrzeugs 22 mit dem Energiespeicher ohne zwischenzeitlichen Energietransfer überwinden kann. So ist es dem Aufklärungsfahrzeug 22a möglich, vom Basisfahrzeug 10a zum Basisfahrzeug 10b zu fliegen, nachdem das Aufklärungsfahrzeug 22a am Basisfahrzeug 10a vollständig geladen wurde.

Vor dem Landen des Aufklärungsfahrzeugs 22a verlässt das Aufklärungsfahrzeug 22b die Energietransfereinheit 12 des Basisfahrzeugs 10b und bewegt sich in Richtung auf das Basisfahrzeug 10c. Das Basisfahrzeug 10c weist zum Basisfahrzeug 10b eine weitere Distanz 28 auf, die beispielsweise im Wesentlichen der Distanz 26 zwischen dem Basisfahrzeug 10a und dem Basisfahrzeug 10b entspricht.

Die Basisfahrzeuge 10a, 10b und 10c erreichen ihre dargestellten Einsatzorte gegebenenfalls durch Zwischenlanden vor dem Erreichen des jeweiligen Einsatzortes und Aufladen der eigenen Energie durch ihre jeweiligen Solarmodule 14. Mit dem System 24 ist somit ein Erreichen entlegener Orte, insbesondere durch die Aufklärungsfahrzeuge 22, möglich.

In Fig. 4 ist ein weiteres System 24 dargestellt, das hier nur aus einem Basisfahrzeug 10 und mehreren Aufklärungsfahrzeugen 22 besteht. Zum Erreichen eines Ortes für eine Aufklärungsmission werden das Basisfahrzeug 10 und die Aufklärungsfahrzeuge 22a bis 22d beispielsweise direkt im Zielgebiet abgeworfen. Das Basisfahrzeug 10 dient dann lediglich zum Laden der Aufklärungsfahrzeuge 22a bis 22d, um eine Aufklärungsmission ununterbrochen fortführen zu können.

Dieses System 24 ist jedoch ebenfalls geeignet, um sich einem entlegenen Ort selbst zu nähern. Hierzu bewegt sich das gesamte System 24 bis die Energiekapazität des Basisfahrzeugs 10 sowie der Aufklärungsfahrzeuge 22a bis 22d im Wesentlichen erschöpft ist. Das Basisfahrzeug 10 landet und klappt seine Solarmodule 14 aus und füllt mit der dadurch gewonnen Energie den eigenen Energiespeicher mit Energie. Daraufhin werden die einzelnen Aufklärungsfahrzeuge 22a bis 22d über die Energietransfereinheit 12 ebenfalls wieder mit genügend Energie für die weitere Fortbewegung geladen. Das gesamte System 24 verlässt dann den aktuellen Ort, nachdem alle Energiespeicher des Basisfahrzeugs 10 sowie der Aufklärungsfahrzeuge 22a bis 22d genügend geladen sind und bewegt sich weiter auf ein Aufklärungsgebiet zu. Erneut wird, falls das Aufklärungsgebiet nicht erreicht wird, bevor die einzelnen Energiekapazitäten des Basisfahrzeugs 10 sowie der Aufklärungsfahrzeuge 22a bis 22d erschöpft sind, die zuvor genannten Ladevorgänge, nämlich Energietransfervorgänge, wiederholt.

Fig. 5 zeigt ein Aufklärungsgebiet 30 in der Draufsicht. Dieses Aufklärungsgebiet wird durch vier Aufklärungsfahrzeuge 22 aufgeklärt. Diese sind beispielsweise in einer Ruheposition gleichmäßig verteilt um ein Basisfahrzeug 10 angeordnet. Das Aufklärungsgebiet 30 wird beispielsweise lediglich durch die vier Aufklärungsfahrzeuge 22a bis 22d im Hinblick auf auftretende Geräusche oder Bewegungen überwacht.

Erst beim Auftreten einer Bewegung oder eines Geräusches starten die Aufklärungsfahrzeuge 22, um das Aufklärungsgebiet 30 im Bereich, in dem die Bewegung oder das Geräusch aufgetreten ist, genauer zu untersuchen. Zur Anordnung der Aufklärungsfahrzeuge 22 werden diese durch das Basisfahrzeug 10 koordiniert, indem das Basisfahrzeug 10 Befehle über eine Drahtlosschnittstelle zwischen dem Basisfahrzeug 10 und den Aufklärungsfahrzeugen 22 überträgt.

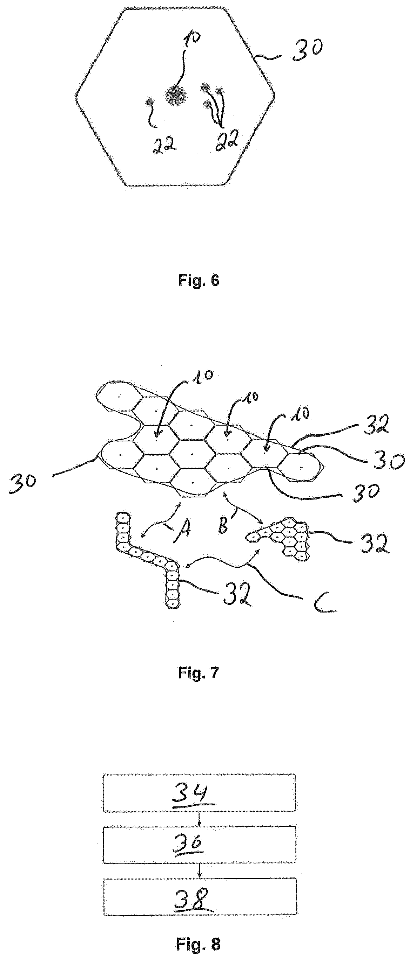

Hierdurch ist es zum Beispiel möglich, wie in Fig. 6 dargestellt, dass, wenn beispielsweise ein Geräusch im rechten Bereich des dargestellten Aufklärungsgebiets 30 vom Basisfahrzeug 10 oder einem der Aufklärungsfahrzeuge 22 detektiert wird, mehrere Aufklärungsfahrzeuge 22, hier drei, in Richtung auf die Geräuschquelle zur genaueren Beobachtung gesendet werden. Weiterhin bleibt ein Basisfahrzeug 10 im linken Bereich angeordnet und überwacht den übrigen Bereich des Aufklärungsgebiets 30. Vorzugsweise lassen sich beim Einsatz von mindestens zwei Aufklärungsfahrzeugen 22 dreidimensionale Tonaufnahmen oder auch dreidimensionale Videoaufnahmen anfertigen. Zusätzlich kann eine Lokalisierung von Funkwellen auf Basis von Feldstärken und/oder Laufzeitunterschieden erfolgen Diese können beispielsweise an das Basisfahrzeug 10 übertragen werden. In dem Basisfahrzeug 10 verwaltet dann eine Rechnereinheit beispielsweise diese Daten und führt vergleichsweise rechenintensive Datenverarbeitungsaufgaben durch, wie beispielsweise fotogrammetrische Vermessung, Entscheidungsfindung, Suchstrategien oder Signalverarbeitung mehrerer Datenquellen, zum Beispiel Tonanalyse mehrerer Aufklärungsfahrzeuge 22 an verschiedenen Orten von derselben Schallquelle. Demnach verwaltet gemäß diesem oder anderer Ausführungsbeispiele das Basisfahrzeug 10 Flugzonen und Lande- und Ladepläne. Das Basisfahrzeug 10 verteilt außerdem Aufgaben und gibt Support, Kommunikation und Aufklärung.

In Fig. 7 sind drei Formen eines Aufklärungsgebiets 30 dargestellt. Diese Aufklärungsgebiete 30 sind wiederum in Teilaufklärungsgebiete 32 unterteilt. Jedem Teilaufklärungsgebiet 32 ist im Zentrum ein Basisfahrzeug 10 zugeordnet. Verändert sich das Aufklärungsgebiet 30, wie durch die Pfeile A, B, C dargestellt, so kann durch neue Anordnung der Teilaufklärungsgebiete 32 das Aufklärungsgebiet 30 optimal abgedeckt werden. Hierzu kommunizieren einerseits die Basisfahrzeuge 10 untereinander, wobei jedes Basisfahrzeug 10 in seinem Teilaufklärungsgebiet 32 mehrere einzelne Aufklärungsfahrzeuge 22 durch Senden von Befehlen steuert.

Fig. 8 zeigt exemplarisch den Ablauf eines Ausführungsbeispiels des Verfahrens. In einem Schritt 34 tauschen das Aufklärungsfahrzeug 22 und das Basisfahrzeug 10 Positionsdaten miteinander aus. Im darauffolgenden Schritt 36 nähert sich ein Aufklärungsfahrzeug 22 dem Basisfahrzeug 10, nämlich der Energietransfereinheit 12 des Basisfahrzeugs 10. Im nächsten Schritt 38 wird dann das Aufklärungsfahrzeug 22 mit Energie vom Basisfahrzeug 10 durch Übertragen der Energie, vorzugsweise kontaktlos, geladen.

## Patentansprüche

1. Basisfahrzeug für mindestens ein Aufklärungsfahrzeug (22), umfassend:
- mindestens einen Antrieb (18) zur Fortbewegung des Basisfahrzeugs (10),
- eine Steuerung zur unbemannten Fortbewegung des Basisfahrzeugs (10),
- eine Energietransfereinheit (12) zum Transferieren von Energie an mindestens ein unbemanntes Aufklärungsfahrzeug (22) und
- eine Kommunikationseinheit mit mindestens einer Drahtlosschnittstelle zumindest zum Austausch von Positionsdaten des Basisfahrzeugs (10) mit dem mindestens einen Aufklärungsfahrzeug (22).

2. Basisfahrzeug nach Anspruch 1, wobei die Energietransfereinheit (12) eine Batterie, einen Akkumulator, eine Brennstoffzelle und/oder einen Energiewandler, insbesondere einen Verbrennungsmotor, eine Windenergieanlage und/oder Solarmodule (14), zur Bereitstellung der Energie zum Transferieren umfasst und/oder
die Energietransfereinheit (12) einer Ladeeinheit zum Transferieren elektrischer Energie, einer Tankeinheit zum Transferieren von Energie in Form eines Brennstoffs oder eines chemischen Energieträgers oder einer mechanischen Einheit zum Wechseln eines Energiespeichers zum Transferieren der Energie entspricht.

3. Basisfahrzeug nach Anspruch 1 oder 2, wobei das Basisfahrzeug (10) ein unbemanntes Flugobjekt, vorzugsweise ein Flächenflieger oder eine Flugdrohne, wie ein Multicopter, ist.

4. Basisfahrzeug nach einem der vorhergehenden Ansprüche, wobei
die Kommunikationseinheit eingerichtet ist, Parameter zumindest des einen Aufklärungsfahrzeugs (22) zu empfangen,
das Basisfahrzeug (10) eine Datenverarbeitungseinrichtung aufweist, um Befehle für das oder ein anderes Aufklärungsfahrzeug (22) in Abhängigkeit der empfangenen Parameter zu erzeugen und
die Kommunikationseinheit eingerichtet ist, die erzeugten Befehle an das oder ein weiteres Aufklärungsfahrzeug (22) auszusenden.

5. Basisfahrzeug nach einem der vorhergehenden Ansprüche, wobei die drahtlose Schnittstelle eine Schnittstelle zum Herstellen einer drahtlosen Breitbandverbindung, insbesondere eine Satellitenverbindung, einer proprietären Funkverbindung und/oder einer Mobilfunkverbindung, zum Beispiel eine LTE- oder 5G-Verbindung, ist.

6. Basisfahrzeug nach einem der vorhergehenden Ansprüche, wobei das Basisfahrzeug (10) eine Relaisstation oder eine Basisstation zum Weiterleiten von Daten von dem mindestens einen Aufklärungsfahrzeug (22) zu einer Leitstelle und/oder von einer Leitstelle zu dem mindestens einen Aufklärungsfahrzeug (22) umfasst.

7. Basisfahrzeug nach Anspruch 6, wobei die Kommunikationseinheit eingerichtet ist, Daten mit mindestens zwei unterschiedlichen Datenprotokollen zu empfangen und auszusenden.

8. Basisfahrzeug nach einem der vorhergehenden Ansprüche, wobei die Steuerung einen Speicher aufweist, um vorgegebene Daten und/oder über die Kommunikationseinheit empfangene Daten von der Leitstelle und/oder dem mindestens einen Aufklärungsfahrzeug (22) zu hinterlegen.

9. Basisfahrzeug nach einem der vorhergehenden Ansprüche, wobei
das Basisfahrzeug (10) Sensoren zum Erfassen seiner Umgebung und seiner Eigenbewegung aufweist,
die Sensoren mit der Steuerung verbunden sind, um Sensordaten an die Steuerung zu übertragen, und
die Steuerung eingerichtet ist, das Basisfahrzeug (10) in Abhängigkeit der Sensordaten und vorgegebener Daten und/oder der Sensordaten und über die Kommunikationseinheit empfangener Daten autonom fortzubewegen oder umzupositionieren.

10. Basisfahrzeug nach einem der vorhergehenden Ansprüche, wobei
das Basisfahrzeug (10) eingerichtet ist, Referenzdatensätze zur Erkennung vordefinierter Objekte an das mindestens eine Aufklärungsfahrzeug (22) zu senden, wobei
die Referenzdatensätze über eine Leitstelle in das Basisfahrzeug (10) ladbar sind und/oder basierend auf erfassten Sensordaten innerhalb des Basisfahrzeugs (10) generierbar sind, wobei
die Referenzdaten der Referenzdatensätze vorzugsweise Abmessungen, Infrarotsignaturen, Bilddaten des zu erfassenden Objektes umfassen und/oder die Referenzdaten in Form von neuronalen Netzen in das mindestens eine Aufklärungsfahrzeug (22) geladen werden.

11. Verfahren zum Betreiben eines Basisfahrzeugs nach einem der Ansprüche 1 bis 10, wobei das Basisfahrzeug (10) mit einem Aufklärungsfahrzeug (22), das ein unbemanntes Flugobjekt, vorzugsweise ein Flächenflieger oder eine Flugdrohne, wie ein Multicopter, ist, über eine Drahtlosschnittstelle Daten austauscht.

12. Verfahren nach Anspruch 11, wobei Energie an das Aufklärungsfahrzeug (22) von einem Basisfahrzeug (10) transferiert wird, indem
- das Aufklärungsfahrzeug (22) und das Basisfahrzeug (10) über eine Drahtlosschnittstelle Positionsdaten miteinander austauschen,
- sich das Aufklärungsfahrzeug (22) basierend auf den Positionsdaten einer Energietransfereinheit (12) des Basisfahrzeugs (10) nähert und
- nach dem Erreichen der Energietransfereinheit (12) durch das Aufklärungsfahrzeug (22) Energie vom Basisfahrzeug (10) zum Aufklärungsfahrzeug (22) transferiert wird.

13. Verfahren nach Anspruch 11 oder 12, wobei das Basisfahrzeug (10) Befehle an mehrere Aufklärungsfahrzeuge (22) über die Drahtlosschnittstelle aussendet, um die Aufklärungsfahrzeuge (22) zumindest teilweise direkt oder indirekt zu steuern, wobei Daten insbesondere mit mindestens einem Sensor, mindestens einer Kamera und/oder mindestens einem Mikrofon mindestens eines der Aufklärungsfahrzeuge (22) aufgenommen und an das Basisfahrzeug (10) übertragen werden.

14. Verfahren nach Anspruch 13, wobei
die von dem oder den Aufklärungsfahrzeugen (22) empfangenen Daten im Basisfahrzeug (10) gespeichert und/oder an eine Leitzentrale übertragen und/oder
die Daten verarbeitet werden und in Abhängigkeit der verarbeiteten Daten Befehle an ein oder mehrere Aufklärungsfahrzeuge (22) und/oder eine Steuerung des Basisfahrzeugs (10) zur Fortbewegung oder Umpositionierung des Basisfahrzeugs (10) ausgesendet werden.

15. System mit mindestens einem Basisfahrzeug (10) nach einem der Ansprüche 1 bis 10, und mindestens einem Aufklärungsfahrzeug (22), insbesondere eingerichtet, um ein Verfahren nach einem der Ansprüche 10 bis 14 auszuführen.
